# EUROPEAN PATENT APPLICATION

(11) **EP 3 299 207 A1**
(43) Date of publication of application: **28.03.2018**
(21) Application number: 17191963.2
(22) Date of filing: 19.09.2017
(51) Int. Cl.: B60K 35/00, B60W 40/08, G02B 5/30, F21V 8/00, G02B 6/36

(54) **RECONFIGURABLE DISPLAY WITH CAMERA APERTURE THERETHROUGH**

(30) Priority: 22.09.2016 US 201662398124 P
(71) Applicant: Delphi Technologies, Inc., Troy, MI 48007-5052 (US)
(72) Inventor: DAVIS, J. Roger, RUSSIAVILLE, INDIANA 46979 (US); UGLUM, Paul, A, NOBLESVILLE, INDIANA 46060 (US)
(74) Representative: Robert, Vincent

(57) **Abstract**

A reconfigurable display system (10) includes a camera (24), a thin-film-transistor layer, and a film layer. The camera (24) is located behind a display (20) and oriented to have a field-of-view (26) of a viewable-side (28) of the display (20). The thin-film-transistor layer of the display (20) defines a window whereby the camera (24) views the field-of-view (26) through the thin-film-transistor layer. The film layer of the display (20) defines an aperture though the film layer, wherein the film layer is positioned so that the aperture is aligned with the window. As a result, the camera (24) views the field-of-view (26) through the aperture and the thin-film-transistor layer.

## Description

### TECHNICAL FIELD OF INVENTION

This disclosure generally relates to a display, and more particularly relates to a display that includes an aperture through which a camera can see.

### BACKGROUND OF INVENTION

A growing number of vehicles employ reconfigurable displays such as an Active Matrix Liquid Crystal Display (AMLCD) or similar technology to convey important vehicle information such as vehicle speed, engine speed (RPMs), fuel level, temperature, and warning indicators to the driver. This display is frequently located in the instrument cluster between the steering wheel and front glass or windshield. More recently, new technology has been competing with this same display space as camera systems are employed to monitor the driver for safety features. The difficulty is locating the one or more cameras or other sensors in such a way that they minimally interfere both mechanically and visually with the desired display features. One such approach commonly suggested is to use a cut display such that a notch or hole is cut completely through all layers of the display to facilitate a rear-mounted camera positioned to 'see' through the notch or hole to the driver's face. Such solutions are either technically difficult to achieve or very expensive due to the cutting of the thin-film-transistor (TFT) glass utilized as one of the many layers that constitute the AMLCD.

### SUMMARY OF THE INVENTION

Described herein a reconfigurable display that defines an aperture or opening through which a camera can 'see' that keeps cost low and is more technically feasible than the aforementioned practice of cutting holes entirely through the display. The proposed solution to the problem stated is to use a modified display stack that defines an aperture for the camera or sensor as created via a cut-out or notch through all display layers except the TFT glass, which defines a window through which the camera sees. The other layers typically consist of plastic molded parts for light dispersion and various film layers that can be easily die-cut to allow for an optical path through the display stack. Layers within the display stack that are printed through a manufacturing process are modified such that elements are not printed in the area desired for the aperture. This may include, for example, a color filter. The camera or any other type of sensor requiring an aperture through the display would be rear-mounted and have a site hole through the created aperture. Through normal control of the display image, the area of TFT reserved for the window can be gated or controlled such that the field-of-view of the camera is minimally obstructed. Optionally, as needed, the area of TFT in the path of the field-of-view could be controlled to alter the light transmission to the camera. By creating an aperture through the display stack by cutting films, modifying the printed elements, and altering the shape of the light dispersion layer while not changing the properties of the TFT glass will allow for shared use of the space by both camera and display while keeping costs low.

In accordance with one embodiment, a reconfigurable display system is provided. The system includes a camera, a thin-film-transistor layer, and a film layer. The camera is located behind a display and oriented to have a field-of-view of a viewable-side of the display. The thin-film-transistor layer of the display defines a window whereby the camera views the field-of-view through the thin-film-transistor layer. The film layer of the display defines an aperture though the film layer, wherein the film layer is positioned so that the aperture is aligned with the window. As a result, the camera views the field-of-view through the aperture and the thin-film-transistor layer.

Further features and advantages will appear more clearly on a reading of the following detailed description of the preferred embodiment, which is given by way of non-limiting example only and with reference to the accompanying drawings.

### BRIEF DESCRIPTION OF DRAWINGS

The present invention will now be described, by way of example with reference to the accompanying drawings, in which:
Fig. 1 is side view of a vehicle equipped with a reconfigurable display system in accordance with one embodiment; and
Fig. 2 is an exploded view of the display of Fig. 1 in accordance with one embodiment.

### DETAILED DESCRIPTION

The proposed solution to the problem stated is to use a modified display stack that includes an aperture for the camera or sensor as created via a cut-out or notch through all display layers except the TFT glass. The other layers consist of plastic molded parts for light dispersion and various film layers that can be easily die-cut to allow for an optical path through the display stack. Layers within the display stack that are printed through a manufacturing process are modified such that elements are not printed in the area desired for the camera aperture. This may include, for example, the color filter. The camera or any other type of sensor requiring an aperture through the display would be rear-mounted and have a site hole through the created aperture. Through normal control of the display image, the area of TFT that shall be transparent for the camera system can be gated by the controller software such that the camera optics is minimally obstructed. Optionally, as needed, the area of TFT in the path of camera optics could be controlled by software to alter the light transmission to the camera sensor. By creating an aperture through the display stack by cutting films, modifying the printed elements and altering the shape of the light dispersion layer while not changing the properties of the TFT glass will allow for shared use of the space by both camera and display while keeping costs low.

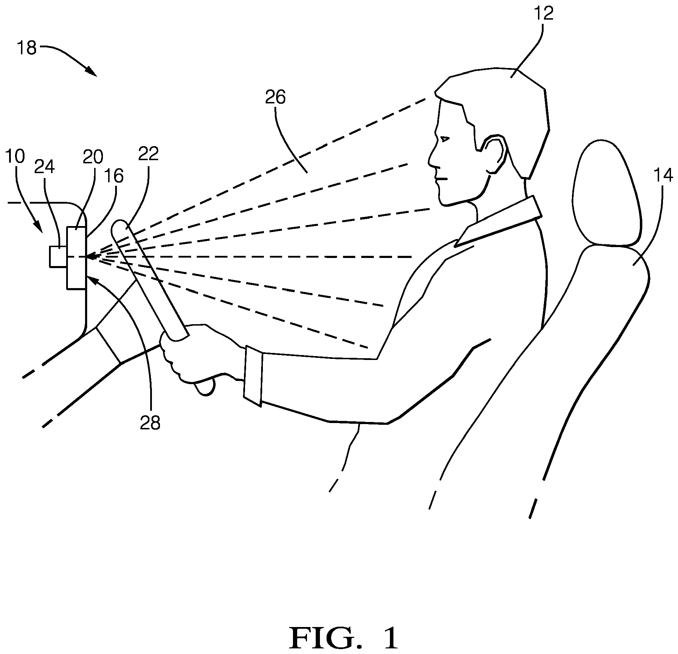

Fig. 1 illustrates a non-limiting example of a vehicle 18 occupied by an occupant 12 residing in a seat 14 of the vehicle 18, The vehicle 18 is equipped with a reconfigurable display system 10, hereafter referred to as the system 10. As used herein, the term 'reconfigurable' means that an image 16 displayed by the system 10 is controlled by, for example, a processor (not shown) in a way similar to how a computer display or monitor is controlled. The system 10 includes a display 20 that in this non-limiting example is positioned behind a steering-wheel 22 of the vehicle 18. This location is illustrated so that is can be readily appreciated that the space or real-estate for sensors used to detect something about the occupant 12 is difficult to provide.

To avoid wasting valuable space around the display 20, a camera 24 for taking images of a field-of-view 26 that in this example includes the occupant 12 is located behind the display 20. That is, the camera 24 is oriented so field-of-view 26 emanates from of a viewable-side 28 of the display 20, i.e. from where the image 16 is displayed. That is, that the camera 24 is behind the display 20 means that the camera 24 looks through the display 20 rather than being located beside the display 20.

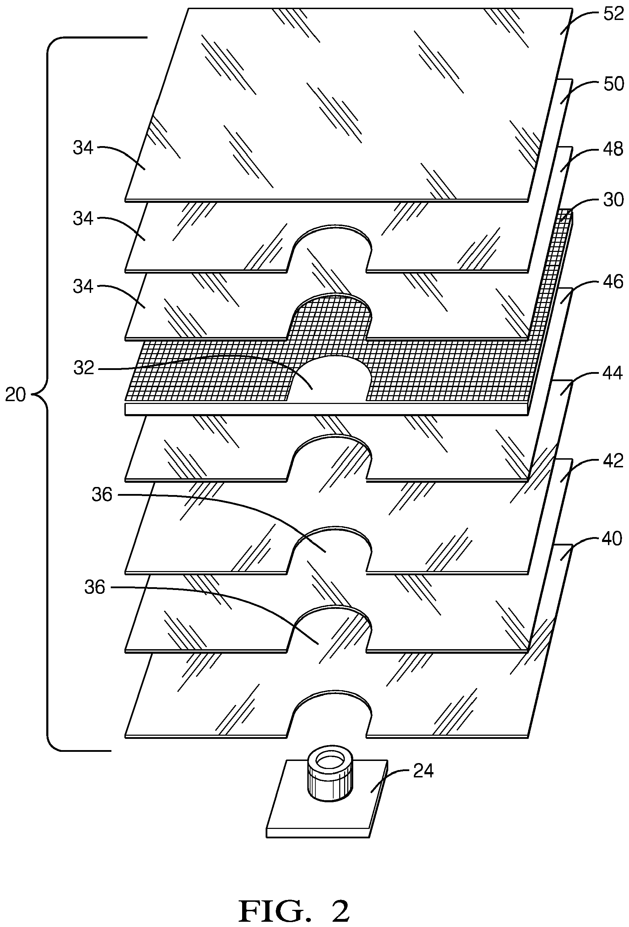

Fig. 2 illustrates further non-limiting details of the system 10, in particular non-limiting details about the display 20. In order to provide a path for light to travel from the field-of-view 26 into the camera 24, the display 20 includes a thin-film-transistor layer 30 of the display 20 that defines a window 32 whereby the camera 24 views the field-of-view 26 through the thin-film-transistor layer 30. As will be recognized by those in the art, typical examples of a thin-film-transistor (TFT) layers used in displays can be operated so that selected sections of the TFT layer are clear or substantially clear. This ability avoids the need to drill or otherwise form an opening or hole in the thin-film-transistor layer 30 which is difficult because the substrate of the thin-film-transistor layer 30 is formed of glass. That is, the configuration of the system 10 described here is advantageous over the prior art because the thin-film-transistor layer 30 is left uncut, thereby avoiding the difficulty and expense in making a cut in the glass.

The display 20 also includes one or more instances of a film layer 34 of the display 20 that defines an aperture 36 though the film layer 34. The film layer 34 is positioned so that the aperture 36 is aligned with the window 32 so that the camera 24 receives light from or views the field-of-view 26 through the aperture 36 and the window 32 the thin-film-transistor layer 30. By way of example and not limitation, the film layer 34 may include one or more, or any combination of, a backlight diffuser 40, a brightness enhancing film 42, optional film(s) 44, a rear polarizer 46, a front polarizer 48, and/or an anti-rainbow film 50. The display 20 may also include a cover-lens or touch-panel 52 which, as will be recognized by those in the art is substantially clear, so can also be formed of un-cut glass or plastic.

Accordingly, a reconfigurable display system (the system 10) that provides a means by which a camera 24 can 'see' through the display 20 without having to drill glass is provided.

While this invention has been described in terms of the preferred embodiments thereof, it is not intended to be so limited, but rather only to the extent set forth in the claims that follow.

## Claims

1. A reconfigurable display system (10) comprising:
a camera (24) located behind a display (20) and oriented to have a field-of-view (26) of a viewable-side (28) of the display (20);
a thin-film-transistor layer (30) of the display (20) that defines a window (32) whereby the camera (24) views the field-of-view (26) through the thin-film-transistor layer (30); and
a film layer (34) of the display (20) that defines an aperture (36) though the film layer (34), wherein the film layer (34) is positioned so that the aperture (36) is aligned with the window (32), whereby the camera (24) views the field-of-view (26) through the aperture (36) and the thin-film-transistor layer (30).
